# EUROPEAN PATENT APPLICATION

(11) **EP 4 336 283 A1**
(43) Date of publication of application: **13.03.2024**
(21) Application number: 22306337.1
(22) Date of filing: 09.09.2022
(51) Int. Cl.: G05B 19/18, B29D 11/00, G05B 19/4099

(54) **METHOD FOR MANUFACTURING AN OPHTHALMIC DEVICE COMPRISING MACHINING**

(71) Applicant: Essilor International, 94220 Charenton-Le-Pont (FR)
(72) Inventor: CASTRO MARTINEZ, Luis, 94100 SAINT MAUR DES FOSSES (FR); BESSONNET, Stephane, 94000 CRETEIL (FR)
(74) Representative: Santarelli

(57) **Abstract**

The disclosure provides a method for manufacturing an ophthalmic device, comprising a machining step (110) to provide a predetermined surface (50) on a part and which corresponds to an initial ophthalmic surface having at least one discontinuity (55, 55a-c), the machining step being carried out according to a determined kinematic of a machining tool (27) which is function of the initial ophthalmic surface, wherein the kinematic comprises at least a first tool path portion in which a cutting edge of a machining tool cuts at least a portion of the discontinuity during a first motion on the predetermined surface, and at least a second tool path portion in which the cutting edge of the machining tool jumps over and is remote to the discontinuity during a second motion on the predetermined surface, and the kinematic is carried out with a single feed rate during both first and second motions.

## Description

### FIELD OF THE DISCLOSURE

The disclosure relates to a method for manufacturing an ophthalmic device, comprising machining to provide a predetermined surface on a part and which corresponds to an ophthalmic surface having at least one discontinuity.

In particular, the disclosure relates to a method for machining such a predetermined surface on a part which is either an ophthalmic device or a mold into which such an ophthalmic device is intended to be molded.

The disclosure also relates to a command and control unit including system elements configured to run a computer program in order to implement at least the machining of the method, and to a manufacturing system comprising such a command and control unit and configured for carrying out such a method.

The disclosure also relates to a computer program including instructions configured to implement the machining of such a method, when said computer program is run by a computer, and to a client-server communication interface for transferring to a remote computer at least manufacturing data which are determined by a computer program that implements at least some parts of such a method, when said computer program is run in a command and control unit, the remote computer implementing the other parts of such method.

### BACKGROUND ART

It is known to manufacture ophthalmic devices thanks to machining method carried out by a machining system having a machining tool.

In particular, for machining a predetermined surface of an ophthalmic device having several protrusions, it is known from US 2019/0086897 to calculate a 3D tool path with the generation of an integrated reference variable for interpolating moving single axes of a precision machine. The calculation of the reference variables is carried out analytically in order to follow with a previously defined working contour, such as in particular a cutting contour of the tool, the 3D tool path underlying the calculations exactly or up to a defined residual error. The calculation is made thanks to interface outputs, including the position target values of the individual axes, velocity, acceleration or jerk values with equitemporal intervals.

### SUMMARY OF THE DISCLOSURE

The disclosure is directed to a method for manufacturing an ophthalmic device comprising machining to provide a predetermined surface of an ophthalmic devices having at least a discontinuity, which is easy and convenient to implement.

The disclosure accordingly provides, according to a first aspect, a method for manufacturing an ophthalmic device, comprising a machining step to provide a predetermined surface on a part and which corresponds to an initial ophthalmic surface having at least one discontinuity, the machining step being carried out according to a determined kinematic of a machining tool which is function of the initial ophthalmic surface having at least one discontinuity, wherein the determined kinematic of the machining tool comprises at least a first tool path portion in which a cutting edge of the machining tool cuts at least a portion of the discontinuity during a first motion on the predetermined surface on the part, and at least a second tool path portion in which the cutting edge of the machining tool jumps over and is remote to the discontinuity during a second motion on the predetermined surface on the part, and the determined kinematic of the machining tool is carried out with a single feed rate at least during both first and second motions.

According to the disclosure, the machining tool does not cut as such the material of the part before machining the discontinuity.

The method according to the disclosure thus allows to avoid an overshoot phenomena on the surface which is machined when the machining tool begins to cut the discontinuity.

In particular, the overshoots may be done in the air and not on the surface which is machined, if the kinematic cannot be smoothed enough.

In other words, the method according to the disclosure allows to avoid the instability of the machining by limiting the acceleration on the surface.

The instability is in fact removed or hidden when the machining tool is outside the surface to be machined.

Such a location of the machining tool during the determined kinematic can be named "air cutting".

It is to be noted that the first and second motions may be defined by a revolution on the surface, and in particular having a circular and/or an elliptical shape, or a shape of a strip.

Advantageous and convenient features of the manufacturing method are described below.

In particular, the first tool path portion of the determined kinematic may comprise a continuous acceleration when the machining tool begins to cut or is close to the discontinuity.

The method may comprise a step of selecting the machining tool having at least one cutting edge; a step of selecting the initial ophthalmic surface having at least one discontinuity of the ophthalmic device intended to be manufactured; a step of providing the determined kinematic of the machining tool; and/or a step of machining the predetermined surface according to the determined kinematic of the machining tool.

The first tool path portion of the determined kinematic comprises a continuous acceleration at least during the first motion on the predetermined surface on the part.

The first motion and the second motion are different.

The machining tool is at least one of a turning tool, a diamond turning tool, a milling tool and a fly cutting tool.

The at least one discontinuity is formed by a protrusion and the predetermined surface on the part corresponds to a front or a back surface of the ophthalmic device.

The at least one discontinuity is formed by a groove and the predetermined surface on the part corresponds to an outline of the ophthalmic device.

The protrusion may have a shape of a step which is configured to form for instance a bifocal and/or a trifocal lens.

The initial ophthalmic surface has a plurality of discontinuities located adjacent along several motions on the predetermined surface, and the determined kinematic of the machining tool comprises sequentially the first tool path portion and the second tool path portion so that the cutting edge of the machining tool sequentially cuts at least a portion of a first discontinuity and jumps over at least a second discontinuity adjacent to the first discontinuity during a single motion.

The determined kinematic of the machining tool further comprises sequentially the second tool path portion and the first tool path portion so that the cutting edge of the machining tool sequentially jumps over at least the first discontinuity and cuts at least a portion of the second discontinuity adjacent to the first discontinuity during another single motion.

The single feed rate is equal to the half or the third of the feed rate.

The determined kinematic of the machining tool comprises at least a third tool path portion in which the cutting edge of the machining tool does not meet any discontinuity during a third motion and is carried out with a feed rate greater than the single feed rate.

The disclosure also refers to a method for machining a predetermined surface on a part which is an optical element, namely an ophthalmic device or a mold into which such an ophthalmic device is intended to be molded, the method comprising:
- a step of selecting a machining tool having at least one cutting edge;
- a step of selecting the initial ophthalmic surface having at least one discontinuity of the ophthalmic device intended to be manufactured;
- a step of providing a determined kinematic of the machining tool which is function of the initial ophthalmic surface having at least one discontinuity;
- a step of machining the predetermined surface according to the determined kinematic of the machining tool;
wherein the determined kinematic of the machining tool comprises at least a first tool path portion in which a cutting edge of a machining tool cuts at least a portion of the discontinuity during a first motion on the predetermined surface on the part, and at least a second tool path portion in which the cutting edge of the machining tool jumps over and is remote to the discontinuity during a second motion on the predetermined surface on the part, and the determined kinematic of the machining tool is carried out with a single feed rate at least during both first and second motions.

If the part is an ophthalmic device, the at least one discontinuity is made by a protrusion on a front face and/or back face, or by a groove on an outline; and if the part is a mold, the at least one discontinuity is made by a cavity on a front mold face and/or back mold face, or by a rib on an edge mold.

The protrusion and/or the cavity may have a shape of a step which is configured to form for instance a bifocal and/or a trifocal lens.

The disclosure also provides, according to a second aspect, a command and control unit including system elements configured to run a computer program in order to implement each of the machining step of the method for manufacturing an ophthalmic device as described above.

The disclosure further provides, according to a third aspect, a manufacturing system comprising a machining tool having a cutting edge and a command and control unit as described above, the system being configured for carrying out such a machining step.

The disclosure also provides, according to a fourth aspect, a computer program including instructions configured to implement the machining step as described above, when said computer program is run by a computer.

The disclosure further provides, according to a fifth aspect, a client-server communication interface for transferring to a remote computer at least manufacturing data, such as the determined kinematic, which are determined by a computer program that implements at least some steps of the method for manufacturing by machining an ophthalmic device as described above, when said computer program is run in a command and control unit, the remote computer implementing the other steps of such method for manufacturing.

### BRIEF DESCRIPTION OF THE DRAWINGS

The description of the disclosure now continues with a detailed description of advantageous embodiments given hereinafter by way of nonlimiting example and with reference to the appended drawings.
Figure 1 schematically depicts a manufacturing system such as a digital surfacing machine, configured to carry out steps of a method for manufacturing an ophthalmic device, according to the disclosure.
Figure 2 diagrammatically shows a client-server communication interface comprising system parts configured for transferring at least one configuration parameter determined by the method according to the disclosure to a remote data processing system.
Figure 3 is a block diagram illustrating operating steps of the method for manufacturing an ophthalmic device according to the disclosure and thanks to the digital surfacing machine and/or to the client-server communication interface illustrated in Figures 1 and 2.
Figure 4 is a block diagram illustrating a machining step of Figure 3.
Figure 5 shows schematically a determined kinematic carried out by the method according to a first embodiment of the disclosure.
Figure 6 shows schematically a determined kinematic carried out by the method according to a second embodiment of the disclosure.
Figure 7 shows schematically a determined kinematic carried out by the method according to a third embodiment of the disclosure.

### DETAILED DESCRIPTION OF EXAMPLE EMBODIMENTS

The disclosure is directed to a method for manufacturing an ophthalmic device comprising machining steps.

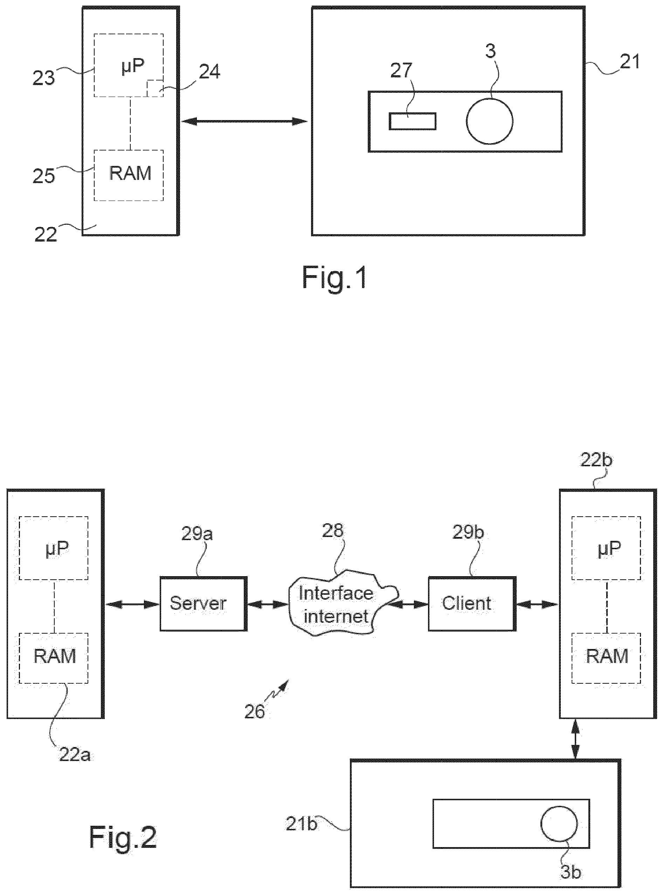

Figure 1 illustrates a manufacturing system configured to carry out at least a machining step of a predetermined surface on a part 3 which is either an ophthalmic device or a mold into which such an ophthalmic device is intended to be mold. Such a mold can be used for manufacturing semi-finished lens or finished lens.

The system comprises a manufacturing machine 21 and system parts generally formed by at least one command and control unit 22 configured to communicate with a data processing system (or control unit) of the machine 21 and configured to run a computer program having instructions configured to implement at least the machining step of the method, when said computer program is run by a computer.

The machine 21 is here a numerical-control "free-form" turning machine 1, numerical control denoting the set of equipment and software, the function of which is to give movement instructions to all the elements of the machine 1.

The machine 1 comprises a machining tool 27, for instance a moveable machining arm on which is mounted a cutting tool provided with a cutting edged, and a data processing system or a control unit (not shown) configured for controlling the tool 27.

The command and control unit 22 comprises a microprocessor 23 having a memory 24, in particular a non-volatile memory, allowing it to load and store the computer program, also called software, which when it is executed in the microprocessor 23, allows the implementation of method according to the disclosure.

This non-volatile memory 24 is for example of the ROM ("read only memory") type.

The command and control unit 22 further comprises a memory 25, in particular a volatile memory, allowing data to be stored during the execution of the software and the implementation of the method.

This volatile memory 25 is for example of the RAM or EEPROM type (respectively "random access memory" and "electrically erasable programmable read only memory").

The command and control unit may be only at least partially integrated into the machine. In other words, the control unit may be arranged in part, or in whole, outside the machine.

The command and control unit can form at least partially a part of the machine and may comprise one or a plurality of command and control modules located inside and/or outside the machine.

In the case where the part which is machined is directly the ophthalmic device, the machine 21 can also be configured for polishing the faces and/or for edging the peripheral edge in order to form the ophthalmic lens.

For instance, the machine 21 can be configured for roughing and next finishing the face(s) in order to form the ophthalmic lens.

The machining tool 27 is here a diamond turning tool.

The machine 21 can also be configured for polishing the faces and/or for edging the peripheral edge in order to form the ophthalmic lens.

The tool can also be adapted to the polishing and/or edging.

In variant, the machining tool could be a turning tool, a milling tool or a fly cutting tool.

The command and control unit 22 is configured to command and control at least some of the steps of the manufacturing method described below.

Figure 2 shows a client-server communication interface 26 comprising for instance a so-called supplier side 29a and another, so-called client side 29b, and these two sides communicating via an internet interface 28.

The supplier side comprises a server 29a linked to a data processing system or a command and control unit 22a of the same type as that in Figure 1, this server 29a being configured to communicate with the internet interface 28.

The client side 29b is configured to communicate with the internet interface 28, and is linked to a data processing system or a command and control unit 22b of the same type as that of the supplier side.

Furthermore, the command and control unit 22b on the client-side is linked to a manufacturing machine 21b of the same type as that in Figure 1 for manufacturing at least the first face 3b of an ophthalmic substrate.

For instance, the command and control unit 22b on the client-side is configured for receiving by a user some parameters about the ophthalmic device to be machined and about the manufacturing method intended to be implemented for machining the ophthalmic device.

For instance, the parameters about the ophthalmic device may include geometrical characteristics and/or optical function of an ophthalmic surface intended to be manufactured and/or at least one information representative of intrinsic parameter of a material of the part to be machined and/or parameters of the cutting edge of the machining tool 27.

The parameters of the cutting edge of the machining tool 27 are linked to a machining kinematic and can be defined by at least one of at least a distance travelled by the cutting edge for machining the predetermined surface, a friction time between the cutting edge and the part which is machined, a cutting depth, feed rate and rotation speed for machining the predetermined surface.

The command and control unit 22b on the client-side, using the internet 28 and server 29a interface, sends the data received to the command and control unit 22a on the supplier-side for the determination of the manufacturing file and operational parameters.

The command and control unit 22a on the supplier-side executes the computer program that it contains in order to implement for instance the step of determination of a machining kinematic of the machining tool 27 which is function of the initial ophthalmic surface and optionally of the parameters of the cutting edge.

Using the server 29a and the internet interface 28, the command and control unit 22a on the supplier-side sends the manufacturing file and operational parameters, in particular the kinematic of the machining tool 27, to the command and control unit 22b on the client side.

The command and control unit 22b on the client side is here configured to execute software for implementing the other steps of the method for manufacturing the part by using the manufacturing file and operational parameters, in particular the machining kinematic of the machining tool 27, in order to machine the predetermined surface on the part 3 which is either an ophthalmic device or a mold into which such an ophthalmic device is intended to be molded thanks to the manufacturing system 21b.

In variant, the manufacturing system can be located on the supplier side so that the command and control unit 22a on the supplier side is configured both to determine the kinematic of the machining tool 27 and to machine the predetermined surface on the part 3 which is either an ophthalmic device or a mold into which such an ophthalmic device is intended to be mold.

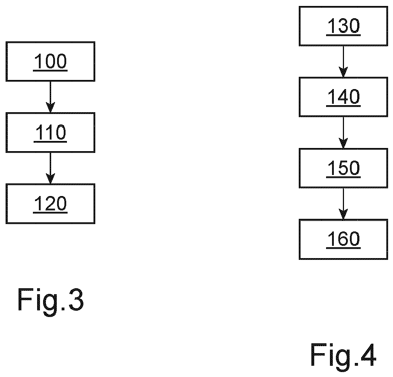

Figure 3 shows the main steps of the method for manufacturing carried out by the manufacturing system and/or client-server communication interface 26 described above, which comprises:
- a step 100 of providing, or obtaining, either an ophthalmic device or a mold into which such an ophthalmic device is intended to be mold;
- a step 110 of machining a predetermined surface on the part provided at step 100, the predetermined surface corresponding to an initial ophthalmic surface having at least one discontinuity; and
- when the part is the mold into which the ophthalmic device is intended to be mold, a step 120 of molding the ophthalmic device in the machined mold so that to obtain the initial ophthalmic surface corresponding for instance to a predetermined optical function on the ophthalmic device.

Figure 4 shows in more detail the machining step 110, which comprises:
- a step 130 of selecting the machining tool 27 having a cutting edge;
- a step 140 of selecting the initial ophthalmic surface of the ophthalmic device intended to be manufactured, the initial ophthalmic surface having at least one discontinuity and corresponding for instance to a predetermined optical function;
- a step 150 of determining and/or providing a determined kinematic of the machining tool 27 which is function of the initial ophthalmic surface and of the at least one discontinuity; and
- a step 160 of machining as such the predetermined surface according to the determined kinematic of the machining tool.

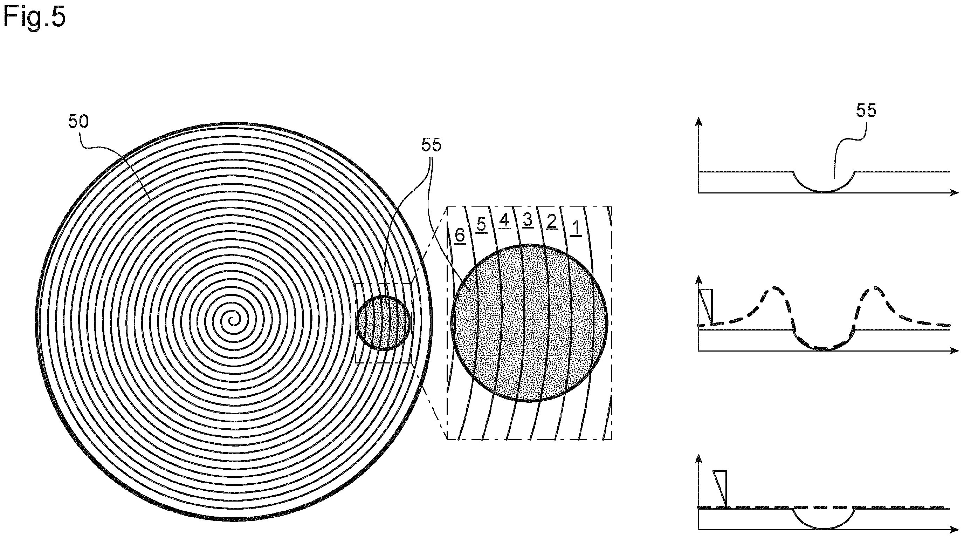

Figures 5 to 7 show in more detail several machining kinematic of the machining tool.

All the machining kinematic shown are function of the initial ophthalmic surface having at least one discontinuity and comprise at least a first tool path portion in which the cutting edge of the machining tool cuts at least a portion of the discontinuity during a first motion on the predetermined surface on the part which is machined, and at least a second tool path portion in which the cutting edge of the machining tool jumps over and is remote to the discontinuity during a second motion on the predetermined surface on the part which is machined.

In addition, all the determined kinematic are carried out with a single feed rate at least during both first and second motions.

In other words, the first and second motions are shifted one to the other as regards a center of the part which is machined or as regards a peripheral outline of the part which is machined.

The first and second motions may be defined by a revolution on the surface, and in particular having a circular and/or an elliptical shape, or a shape of a strip.

In Figure 5, the predetermined surface 50 on the part is substantially flat and comprises only one discontinuity 55 here formed by a cavity on the predetermined surface 50.

The determined machining kinematic is graphically represented by a spiral extending along the predetermined surface 50, including a plurality of furrows which are here regularly spaced one to each other by a distance corresponding to the feed rate of the machining tool.

On the right of the part are shown respectively a detail of the discontinuity 55 on the predetermined surface 50, a shape of the discontinuity 55, also named protrusion in Figure 5, a tool path of the machining tool relative to the predetermined surface 50 (visible by a cut edge) and according to several revolutions noted 1 to 5.

In this embodiment, the determined machining kinematic in view of the discontinuity 55 comprises the following tool path portions:
- during revolutions "1", "3" and "5", a first tool path portion in which the cutting edge of the machining tool cuts at least a portion of the discontinuity 55; and
- during revolutions "2" and "4", a second tool path portion in which the cutting edge of the machining tool jumps over and is remote to the discontinuity 55.

It is to be noted that during revolutions "1", "3" and "5", the first tool path portions of the determined kinematic may comprise a continuous acceleration when the machining tool begins to cut or is close to the discontinuity 55, corresponding to peaks illustrated before and after a cavity; whereas during revolutions "2" and "4", the machining tool does not meet the discontinuity 55.

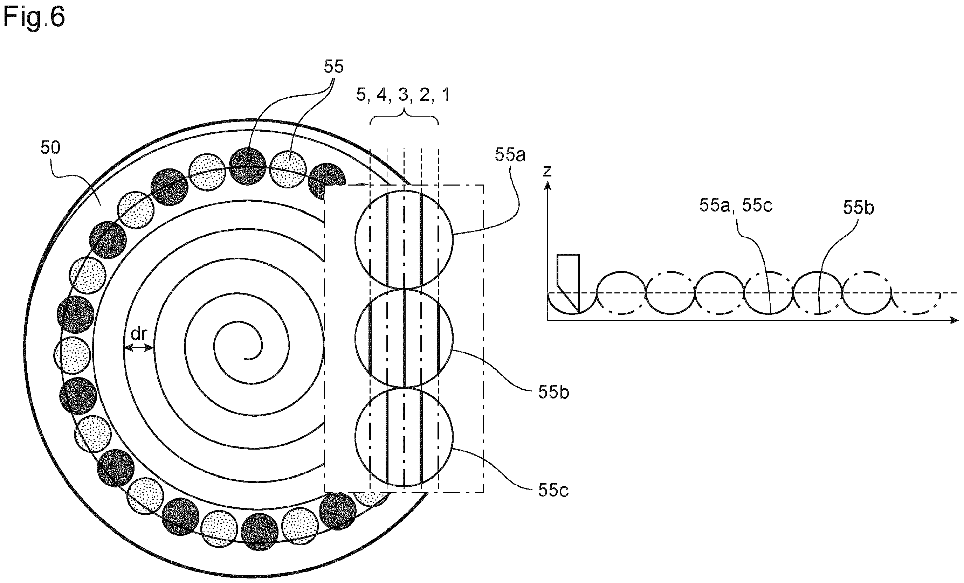

In Figure 6, the predetermined surface 50 on the part comprises a plurality of discontinuities 55 located adjacent along several revolutions on the predetermined surface 50.

The discontinuities 50 are here formed by cavities on the predetermined surface 50.

As in Figure 5, the determined machining kinematic is graphically represented by a spiral extending along the predetermined surface 50, including a plurality of furrows which are here regularly spaced one to each other by a distance corresponding to the feed rate of the machining tool.

On the right of the part are shown respectively a detail of some discontinuities 55a-c on the predetermined surface 50 and a tool path of the machining tool relative to the predetermined surface 50 (visible by a cut edge) and according to several revolutions noted 1 to 5.

In this another embodiment, the determined machining kinematic in view of the discontinuities 55a-c comprises the following tool path portions:
- during revolutions "1", "3" and "5", a first tool path portion in which the cutting edge of the machining tool cuts at least a portion of the discontinuity 55b, and a second tool path portion in which the cutting edge of the machining tool jumps over and is remote to the discontinuities 55a and 55c; and
- during revolutions "2" and "4", a first tool path portion in which the cutting edge of the machining tool cuts at least a portion of the discontinuities 55a and 55c, and a second tool path portion in which the cutting edge of the machining tool jumps over and is remote to the discontinuity 55b.

It is to be noted that during each revolution, the first tool path portions of the determined kinematic may comprise a continuous acceleration when the machining tool begins to cut or is close to the respective discontinuities, corresponding to peaks illustrated before and after cavities.

The above machining kinematic thus comprises sequentially the first tool path portion and the second tool path portion so that the cutting edge of the machining tool sequentially cuts at least a portion of a first discontinuity and jumps over at least a second discontinuity adjacent to the first discontinuity during a single revolution; and further comprises sequentially the second tool path portion and the first tool path portion so that the cutting edge of the machining tool sequentially jumps over at least the first discontinuity and cuts at least a portion of the second discontinuity adjacent to the first discontinuity during another single motion.

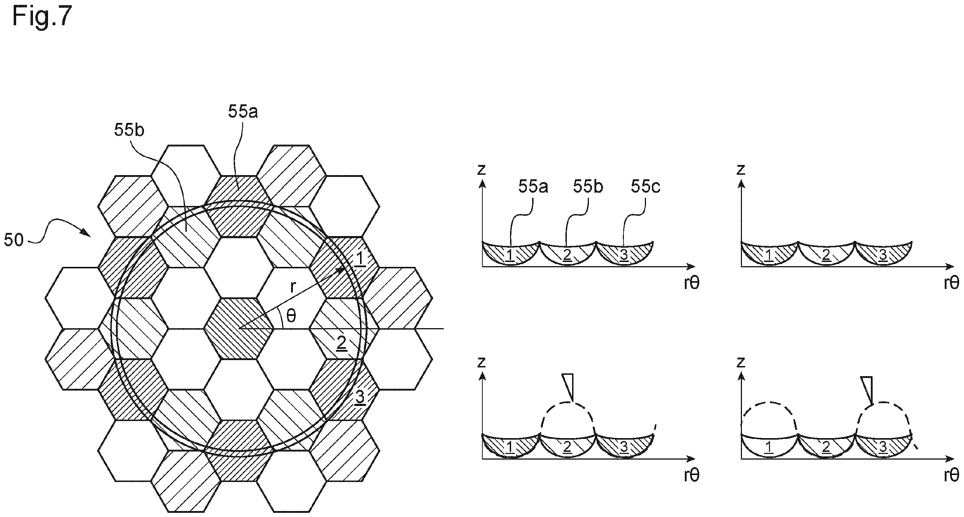

In Figure 7, the predetermined surface 50 on the part comprises a plurality of discontinuities 55 located also substantially adjacent along several revolutions on the predetermined surface 50.

The discontinuities 50 are here formed by cavities of hexagonal-shape on the predetermined surface 50.

On the right of the part are shown respectively a detail of some discontinuities 55a-c on the predetermined surface 50 and a tool path of the machining tool relative to the predetermined surface 50 (visible by a cut edge) and according to several motions noted 1 to 3.

In this another embodiment, the determined machining kinematic in view of the discontinuities 55a-c comprises the following tool path portions:
- during motions "1 and "3", a first tool path portion in which the cutting edge of the machining tool cuts at least a portion of the discontinuities 55a and 55c, and a second tool path portion in which the cutting edge of the machining tool jumps over and is remote to the discontinuity 55b; and
- during motion "2", a first tool path portion in which the cutting edge of the machining tool cuts at least a portion of the discontinuity 55b, and a second tool path portion in which the cutting edge of the machining tool jumps over and is remote to the discontinuities 55a and 55c.

It is to be noted that during each motion, the first tool path portions of the determined kinematic may comprise a continuous acceleration when the machining tool begins to cut or is close to the respective discontinuities, corresponding to peaks illustrated before and after cavities.

The above machining kinematic thus comprises also sequentially the first tool path portion and the second tool path portion so that the cutting edge of the machining tool sequentially cuts at least a portion of a first discontinuity and jumps over at least a second discontinuity adjacent to the first discontinuity during a single motion; and further comprises sequentially the second tool path portion and the first tool path portion so that the cutting edge of the machining tool sequentially jumps over at least the first discontinuity and cuts at least a portion of the second discontinuity adjacent to the first discontinuity during another single motion.

In a variant not illustrated, the determined kinematic of the machining tool comprises at least a third tool path portion in which the cutting edge of the machining tool does not meet any discontinuity during a third motion and is carried out with a feed rate greater than the single feed rate.

The single feed rate can be equal to the half or the third of the feed rate.

In another variant not illustrated, the at least one discontinuity is formed by a groove and the predetermined surface on the part corresponds to an outline of the ophthalmic device.

The above disclosure thus concerns a new kinematic for a turning machine and a new tool trajectory to perform the nominal surface, which allows to smooth the kinematic of the tool to reduce the instability of the close loop and the overshoots of the tool on the surface. Such a new kinematic does not raise up the tool travelled distance on the surface.

The new kinematic is to avoid the instability by limiting the acceleration on the surface. The instability could be eliminated or gone through when the tool is outside the surface, the overshoots are done in the air and not on the surface. Such a location of the machining tool during the determined kinematic can be named "air cutting".

In other words, the machining tool does not cut as such the material of the part before machining the discontinuity, allowing to avoid an overshoot phenomena on the surface which is machined when the machining tool begins to cut the discontinuity.

The instability is in fact hidden when the machining tool is outside the surface to be machined.

In a first example wherein the lens is a ring with five protrusions noted A, B, C, D and E, the tool will not cut all the protrusions at each motion, defined here by revolutions. The tool will cut one protrusion and will jump over the next protrusion. At the first revolution, the tool cuts A, C and E; at the second revolution, the tool cuts B and D etc.

In a second example wherein the lens is a ring with seven protrusions noted A, B, C, D, E, F, G and H, the tool will not cut all the protrusions at each revolution. The machining tool will cut one protrusion and will jump over the two next protrusions. At the first revolution, the tool cuts A, D and G; at the second revolution, the tool cuts B, E and H; at the third revolution, the tool cuts C and F.

It is important to note that between the three revolutions, the tool keeps the same feed rate which can be a reduced feed rate compared to usually.

The first, second and/or third motions are different but, in variant, they can be similar.

The above disclosure may be used with slow tools or fast tools.

In particular when fast tools are used, the kinematic may be predetermined in advance and not in real-time.

The above disclosure may be combined with laser or ultrasonic assistance in particular in case of a turning method and preferably when slow tools are used.

Material of the part which is machined can be made of plastic, steel, or mineral, or any kind of material.

The above disclosure may be used for time consumer manufacturing such as steel mold manufacturing directly by diamond turning tool.

It should be noted more generally that the disclosure is not limited to the examples described and represented.

## Claims

1. A method for manufacturing an ophthalmic device, comprising a machining step (110) to provide a predetermined surface (50) on a part and which corresponds to an initial ophthalmic surface having at least one discontinuity (55, 55a-c), the machining step being carried out according to a determined kinematic of a machining tool (27) which is function of the initial ophthalmic surface having at least one discontinuity, wherein the determined kinematic of the machining tool comprises at least a first tool path portion in which a cutting edge of the machining tool cuts at least a portion of the discontinuity during a first motion on the predetermined surface on the part, and at least a second tool path portion in which the cutting edge of the machining tool jumps over and is remote to the discontinuity during a second motion on the predetermined surface on the part, and the determined kinematic of the machining tool is carried out with a single feed rate at least during both first and second motions.

2. Method according to claim 1 , wherein the first tool path portion of the determined kinematic comprises a continuous acceleration at least during the first motion on the predetermined surface (50) on the part.

3. Method according to one of claims 1 and 2, wherein the machining tool (27) is at least one of a turning tool, a diamond turning tool, a milling tool and a fly cutting tool.

4. Method according to any one of claims 1 to 3, wherein the at least one discontinuity (55, 55a-c) is formed by a protrusion and the predetermined surface on the part corresponds to a front or a back surface of the ophthalmic device.

5. Method according to any one of claims 1 to 4, wherein the at least one discontinuity is formed by a groove and the predetermined surface on the part corresponds to an outline of the ophthalmic device.

6. Method according to any one of claims 1 to 5, wherein the initial ophthalmic surface has a plurality of discontinuities (55a-c) located substantially adjacent along several motions on the predetermined surface (50), and the determined kinematic of the machining tool comprises sequentially the first tool path portion and the second tool path portion so that the cutting edge of the machining tool (27) sequentially cuts at least a portion of a first discontinuity and jumps over at least a second discontinuity during a single motion.

7. Method according to claim 6, wherein the determined kinematic of the machining tool further comprises sequentially the second tool path portion and the first tool path portion so that the cutting edge of the machining tool (27) sequentially jumps over at least the first discontinuity and cuts at least a portion of the second discontinuity during another single motion following the previous single motion.

8. Method according to any one of claims 1 to 7, wherein the determined kinematic of the machining tool comprises at least a third tool path portion in which the cutting edge of the machining tool does not meet any discontinuity during a third motion and is carried out with a feed rate greater than the single feed rate.

9. Method according to claim 8, wherein the single feed rate is equal to the half or the third of the feed rate.

10. A method for machining a predetermined surface on a part which is an optical element, namely an ophthalmic device or a mold into which such an ophthalmic device is intended to be molded, the method comprising:
- a step of selecting a machining tool having (27) at least one cutting edge;
- a step of selecting the initial ophthalmic surface having at least one discontinuity (55) of the ophthalmic device intended to be manufactured;
- a step of providing a determined kinematic of the machining tool which is function of the initial ophthalmic surface having at least one discontinuity;
- a step of machining the predetermined surface according to the determined kinematic of the machining tool;
wherein the determined kinematic of the machining tool comprises at least a first tool path portion in which a cutting edge of a machining tool cuts at least a portion of the discontinuity during a first motion on the predetermined surface on the part, and at least a second tool path portion in which the cutting edge of the machining tool jumps over and is remote to the discontinuity during a second motion on the predetermined surface on the part, and the determined kinematic of the machining tool is carried out with a single feed rate at least during both first and second motions.

11. Method according to claim 10, wherein if the part is an ophthalmic device, the at least one discontinuity is made by a protrusion on a front face and/or back face, or by a groove on an outline; and if the part is a mold, the at least one discontinuity is made by a cavity on a front mold face and/or back mold face, or by a rib on an edge mold.

12. A command and control unit including system elements configured to run a computer program in order to implement the machining of the method according to any one of claims 1 to 11.

13. A manufacturing system comprising a machining tool having a cutting edge and a command and control unit according to claim 12, the system being configured for carrying out said machining.

14. A computer program including instructions configured to implement the machining of the method according to any one of claims 1 to 11, when said computer program is run by a computer.

15. A client-server communication interface for transferring to a remote computer at least manufacturing data, such as a determined kinematic, which is determined by a computer program that implements at least parts of the method according to any one of claims 1 to 11, when said computer program is run in a command and control unit, the remote computer implementing the other parts of said method for manufacturing.
